# EUROPÄISCHE PATENTSCHRIFT

(11) **EP 4 175 836 B1**
(45) Veröffentlichungstag und Bekanntmachung des Hinweises auf die Patenterteilung: **09.10.2024**
(21) Anmeldenummer: 21758307.9
(22) Anmeldetag: 01.07.2021
(51) Int. Cl.: B60B 27/00, B60B 27/02, B60B 1/00, B60B 27/04

(54) **NABE FÜR FAHRRAD-LAUFRAD, BAUGRUPPE FÜR SOLCHE NABE, UND FAHRRAD-LAUFRAD MIT SOLCHER NABE**
HUB FOR BICYCLE WHEEL, ASSEMBLY FOR SUCH A HUB, AND BICYCLE WHEEL COMPRISING SUCH A HUB
MOYEU POUR ROUE DE BICYCLETTE, ENSEMBLE POUR UN TEL MOYEU, ET ROUE DE BICYCLETTE DOTÉE D'UN TEL MOYEU

(30) Priorität: 02.07.2020 DE 102020117539
(43) Veröffentlichungstag der Anmeldung: 10.05.2023
(73) Patentinhaber: Frank Präzisionsteile GmbH, 71711 Murr (DE)
(72) Erfinder: JENNY, Christian, 71522 Backnang (DE)
(74) Vertreter: Pfiz/Gauss Patentanwälte PartmbB
(86) Internationale Anmeldenummer: PCT/DE2021/100569
(87) Internationale Veröffentlichungsnummer: WO 2022/002318

(56) Entgegenhaltungen:
- EP-A1- 2 599 643
- DE-B4- 112017 007 405
- DE-U1- 202011 108 822
- DE-U1- 202018 103 890

## Beschreibung

Die vorliegende Erfindung betrifft eine Nabe für ein Fahrrad-Laufrad nach dem Oberbegriff von Anspruch 1, einen Nabenkörper sowie einen Freilaufkörper für eine solche Nabe, eine Baugruppe für eine solche Nabe, ein Fahrrad-Laufrad mit einer solchen Nabe, sowie ein Fahrrad mit einem solchen Laufrad.

Die erfindungsgemäße Nabe betrifft dabei i.A. eine Nabe für ein antreibbares Laufrad eines Fahrrads. Dabei handelt es sich vorzugsweise um eine Hinterradnabe.

Die erfindungsgemäße Nabe kann einerseits in einem rein muskelbetriebenen Fahrrad eingesetzt werden. Die Nabe ist ebenso geeignet für Fahrräder, welche die Pedalkraft des Nutzers mit Hilfe eines mitgeführten Elektromotors inkl. Akkumulator unterstützen (sog. Pedelec, E-Bike).

Aus dem Stand der Technik sind Naben bekannt, welche einen mit dem Laufrad mitdrehenden Nabenkörper aufweisen. Die Nabe wird dabei bspw. über die Tretkurbeln und ein Kettenblatt des Tretlagers über ein Antriebsmittel (insbesondere eine Kette) angetrieben, nämlich über ein Kraftübertragungsmittel an der Nabe. Als Kraftübertragungsmittel besonders verbreitet sind dabei sog. Kassetten (Ritzelpakete) in derzeit bis zu 12-facher Anordnung, oder sogar darüber. Das Ritzelpaket wird dabei von einem für sich gesehen bekannten (hinteren) Schaltwerk bedient. Das Kraftübertragungsmittel sitzt auf einem Freilaufkörper der Nabe. Der Freilaufkörper ist von dem Nabenkörper getrennt ausgebildet. Zwischen dem Nabenkörper und dem Freilaufkörper wirkt ein sog. Freilauf, der bei Vorliegen einer Tretbewegung einrastet und die Tretkraft über das Kraftübertragungsmittel in die Nabe und somit auf das angetriebene Laufrad überträgt.

Führt der Nutzer allerdings keine Tretbewegung aus, wird die Einrastung des Freilaufs wieder aufgehoben, so dass die Tretkurbel ohne Last nicht zwangsweise mit der Hinterradnabe mitdreht. Im Freilauf kann dazu bspw. ein Sperrklinkensystem oder ein unter Federspannung gegeneinander wirkendes Paar einer axial wirkenden Stirnverzahnung realisiert sein. Vielfältige Ausgestaltungen sind dem Fachmann diesbezüglich geläufig.

Ein Freilauf mit Stirnverzahnung sind aus den Dokumenten EP 2 599 643 A1 und EP 2 221 192 A1 bekannt Ein Freilauf mit zwei beweglich gelagerten Zahnscheiben mit kegelförmiger Verzahnung ist aus Dokument DE 20 2011 108 822 U1 bekannt.

Bekannte Naben mit einem Nabenkörper und einer hiervon getrennten Aufnahme für ein Kraftübertragungsmittel, insbesondere mit einem dazwischen wirkenden Freilauf, bedingen einerseits eine Lagerung des Nabenkörpers gegenüber der Radachse, wozu i.A. zwei gegenüberliegende Wälzlager vorgesehen werden. Die Aufnahme für das Kraftübertragungsmittel (nämlich der Freilaufkörper) muss demgegenüber separat gelagert werden und benötigt dadurch i.A. zwei zusätzliche Wälzlager.

Der bekannte Stand der Technik, welcher zwischen diesen Bauteilen eine Stirnverzahnung vorsieht, weist aber auch Nachteile auf.

Der Freilauf ist durch das permanente Abgleiten von Verzahnungselementen aneinander einem Verschleiß unterworfen. Eine interne Reibung liegt stets vor und kostet Bewegungsenergie. Eine solche Nabe muss des Weiteren regelmäßig gewartet werden. Die Wartungsintervalle sind dabei i.d.R. kurz anzusetzen. Bei der Inbetriebnahme eines neuen Freilaufs weisen die Verzahnungspartner ein Einlaufverhalten auf, d.h. ein stationärer Betriebszustand wird erst nach einem gewissen aufeinander abgestimmten Verschleiß der Verzahnungspartner erreicht.

Die bekannte Stirnverzahnung weist nur eine begrenzte Zahnoberfläche auf, um die hohen Antriebsmomente übertragen zu können. Die Vergrößerung der Fläche durch Ausbildung der Stirnverzahnung in einem radial vom Freilaufkörper abstehenden Flansch hat zur Folge, dass der gesamte benötigte Bauraum für die Baugruppe aus Freilauf und Nabenkörper größer wird.

Der vorliegenden Erfindung liegt die Aufgabe zugrunde, die aus dem Stand der Technik bekannten Nachteile zu überwinden.

Des Weiteren liegt die Aufgabe zugrunde, eine Nabe für ein Fahrrad-Laufrad anzugeben, welche bei kompakter Bauform eine hohe Drehmomentübertragung bei geringem Verschleiß ermöglicht, möglichst wenig Masse aufweist, wartungsarm oder wartungsfrei ist, und verbesserte Laufeigenschaften aufweist. In diesem Zusammenhang sollen auch eine entsprechende Baugruppe für eine solche Nabe, ein Laufrad mit einer solchen Nabe, und ein Fahrrad mit einem solchen Laufrad vorgeschlagen werden.

Eine erfindungsgemäße Nabe für ein Fahrrad-Laufrad, deren Nabenkörper sowie Freilaufkörper, eine Baugruppe für eine solche Nabe, ein Laufrad mit einer solchen Nabe, und ein Fahrrad mit einem solchen Laufrad, welche zumindest eine der oben angegebenen Aufgaben lösen, sind im Rahmen der Ansprüche angegeben.

Vorteilhafte Ausgestaltungen und Weiterbildungen der Erfindung sind Gegenstand der abhängigen Ansprüche.

Eine erfindungsgemäße Nabe für ein Fahrrad-Laufrad nach Anspruch 1 umfasst einen Nabenkörper sowie einen Freilaufkörper, wobei zwischen dem Nabenkörper und dem Freilaufkörper eine Kegelverzahnung realisiert ist.

Der entsprechende Nabenkörper und der entsprechende Freilaufkörper werden durch die Ansprüche 12 und 13 angegeben.

Eine erfindungsgemäße Baugruppe für eine Nabe nach Anspruch 11 umfasst einen entsprechenden Freilaufkörper und einen entsprechenden Nabenkörper, ggf. inklusive einer Zahnscheibe.

Eine erfindungsgemäße Nabe umfasst dabei bevorzugt mindestens eine solche Baugruppe, eine Radachse, zwei Wälzlager für die Lagerung des Freilaufkörpers auf der Achse, und zwei Wälzlager für die Lagerung des Nabenkörpers auf der Achse.

Ein erfindungsgemäßes Laufrad wird durch Anspruch 14 beschrieben. Ein erfindungsgemäßes Laufrad umfasst bevorzugt mindestens eine erfindungsgemäße Nabe, sowie eine Felge und Speichen.

Ein erfindungsgemäßes Fahrrad durch Anspruch 15 beschrieben. Ein erfindungsgemäßes Fahrrad umfasst mindestens ein erfindungsgemäßes Laufrad.

Die Erfindung bietet mindestens einen der nachfolgend aufgeführten Vorteile:
Die Kegelverzahnung ermöglicht im Vergleich zur Stirnverzahnung eine kompaktere und leichtere Bauweise. Durch die Kegelform der Verzahnung wird die Eingriffsfläche vergrößert, ohne dass ein radialer Flansch benötigt wird. Das Ergebnis ist eine höhere Drehmomentübertragung bei kleinerer Baugröße.

Der Verschleiß kann damit verringert und Wartungsintervalle können verlängert werden.

Die Kegelverzahnung weist gegenüber der Stirnverzahnung eine bessere Selbstzentrierung auf.

Der bekannte Stand der Technik erfordert ein Einlaufen. Dies ist bei der vorliegenden Art der Verzahnung aufgrund einer möglichen zentrisch zulaufenden Linienberührung der Zahnvorder- und Zahnrückseite nicht notwendig.

Die vorgeschlagene Lösung ermöglicht ferner eine einfachere Integration einer oder mehrerer Entlüftungsbohrungen in die Nabe.

Dabei können auch verschiedene Werkstoffe und Beschichtungen realisiert werden.

Als Bemessungsgrundlage für den Kegelwinkel wird der Winkel des Kegels angesehen, der in das Werkstück eingebracht wird, bevor die Verzahnung ausgebildet bzw. eingeschnitten / -gefräst oder auf andere Weise hergestellt wird. Dementsprechend wird der 1/2 Kegelwinkel, nämlich die Kegelneigung, als Winkel zwischen einem an die Zahnoberseite angelegten Lineal, Stab oder dgl. Gegenstand, und der Längsachse des Freilaufkörpers, und zwar in deren Schnittpunkt, abnehmbar sein.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale vorteilhafter Weiterbildungen lassen sich dabei einzeln oder auch in beliebiger Kombination realisieren, wodurch weitere vorteilhafte Ausgestaltungen der Erfindung geschaffen werden.

Erfindungsgemäß ist in dem dem Nabenkörper zugewandten Ende des Freilaufkörpers eine endseitige Verzahnung eingebracht, welche einen sich öffnenden Kegelwinkel umschreibt. Mit anderen Worten ist die endseitige Verzahnung des Freilaufkörpers hierbei so ausgestaltet, dass sie - gesehen von der Mittelachse - sowohl in der Längsrichtung als auch in radialer Richtung nach außen gerichtet ist. Die Oberfläche der Verzahnung ist dabei mit dem halben Betrag des Kegelwinkels, nämlich der Kegelneigung, gegenüber der Mittelachse geneigt.

Alternativ kann das dem Nabenkörper zugewandten Ende des Freilaufkörpers eine endseitige Verzahnung aufweisen, welche einen sich schließenden Kegelwinkel umschreibt.

Bevorzugt weist einer der Kegelverzahnungspartner, insbesondere der Freilaufkörper, eine Flachkegelverzahnung mit flachem Öffnungswinkel auf.

Der Öffnungswinkel des Flachkegels beträgt vorzugweise 120,1-179,9°, bevorzugt 121-179°, weiter bevorzugt 125-175°, weiter bevorzugt 130-170°, weiter bevorzugt 135-165°, weiter bevorzugt 140-160°, weiter bevorzugt 145-155°, weiter bevorzugt 150°.

Vorzugsweise ist der Kegel als Kreiskegel mit flachem Öffnungswinkel ausgestaltet, wobei die Mantelflächen konkav/konvex ausgebildet sein können.

In einer alternativen Ausgestaltung kann der Kegel als Steilkegel ausgestaltet sein, vorzugsweise mit einem Kegelwinkel von 30-59°. So ergibt sich eine größere axiale als radiale Erstreckung der Verzahnung, was den in radialer Richtung benötigten Bauraum verringert.

Der Nabenkörper weist vorzugsweise eine zu der Verzahnung des Freilaufkörpers korrespondierende Verzahnung auf. Ist das nabenkörperseitige Ende des Freilaufs mit einem sich öffnenden Kegelwinkel ausgestaltet, muss das korrespondierende Ende des Nabenkörpers mit einem sich schließenden Kegelwinkel desselben Betrags ausgestaltet sein, und umgekehrt.

Die Verzahnung des Nabenkörpers ist vorzugsweise in einer dem Nabenkörper zugeordneten Zahnscheibe realisiert.

Die endseitige Verzahnung des Freilaufkörpers interagiert vorzugsweise mit einer Zahnscheibe, welche einerseits die korrespondierende Kegelverzahnung aufweist, und andererseits in geeigneter Weise das zu übertragende Drehmoment in den Nabenkörper weiter- bzw. einleiten kann. Dazu kann die Zahnscheibe eine weitere radiale Außenverzahnung aufweisen, welche mit entsprechenden Ausnehmungen im Nabenkörper im Eingriff steht, wobei vorzugsweise die Zahnscheibe in axialer Richtung des Nabenkörpers verschiebbar ist. Ferner ist bevorzugt mindestens ein federndes Element vorgesehen, welches die Zahnscheibe gegen die endseitige Verzahnung des Freilaufkörpers drückt. So wird beim Ausüben eines Antriebsmoments ein Eingriff zwischen Freilaufkörper und Zahnscheibe hergestellt, während ansonsten der stehende Freilauf und der während einer Vorwärtsbewegung des Rads drehende Nabenköper mit ihren Verzahnungen aneinander abgleiten können, wodurch der Zweck des Freilaufs erreicht wird. Das Prinzip einer solchen Zahnscheibe und deren Interaktion mit dem Nabenkörper sind für sich gesehen bekannt.

Vorliegend wird eine optionale Zahnscheibe auch als Teil des Nabenkörpers aufgefasst.

Vorzugsweise ist innerhalb einer optionalen Zahnscheibe des Nabenkörpers das Verhältnis der Anzahl der Zähne der Kegelverzahnung zu der Außenverzahnung 1:1 oder alternativ 1:2, oder allgemein 1:N, wobei N eine ganze Zahl ist. Damit verbleibt der jeweilige Kraftfluss zwischen einem Zahn der Kegelverzahnung und einem Zahn der Außenverzahnung im Wesentlichen in den Zähnen und belastet nicht oder nur wenig den empfindlichen Bereich zwischen Zahn und Zahngrund.

Auf der dem Nabenkörper abgewandten Seite weist der Freilaufkörper bevorzugt eine Aufnahme für ein Kraftübertragungsmittel auf. Das Kraftübertragungsmittel kann dabei insbesondere eine Kassette (Ritzelpaket) oder eine Riemenscheibe oder ein Ritzel aufweisen. Ein Kraftübertragungsmittel kann dabei von einem für sich gesehen bekannten Antriebsmittel antreibbar sein. Das Antriebsmittel kann dabei insbesondere eine Kette oder einen Riemen aufweisen.

Vorzugsweise ist die Kegelverzahnungspaarung nur zweiteilig, insbesondere bestehend aus Freilaufkörper und Nabenkörper, bzw. aus Freilaufkörper und einer Zahnscheibe.

Es kann eine Entlüftung der drei innerhalb der Nabe vorliegenden Kammern (Nabenkörper bzw. Nabenkörperraum, Verzahnungsraum, Freilauf bzw. Freilaufraum; bei einer Vorderradnabe nur der Nabenkörper) über Bohrungen und/oder Schlitze und/oder Öffnungen und/oder speziell ausgeformte Endkappen stattfinden. Durch Endkappen an den Enden der Achse kann Luft in bzw. aus dem Innenraum der Radachse ein- bzw. ausströmen. Dadurch entsteht bei einer Abkühlung der Nabe (z.B. während einer Abfahrt, bei Einbruch der Nacht, beim Wechsel von Sonne und Schatten, oder beim Abspritzen der durch Sonne aufgewärmten Nabe mit Wasser) kein Unterdruck mehr in den genannten Kammern, wodurch Luft mit Wasser und gegebenenfalls auch Schmutz durch die Dichtungen, wie z.B. der Wälzlager, oder durch die Dichtung des Freilaufs ins Innere gesaugt werden und dort Schaden anrichten können.

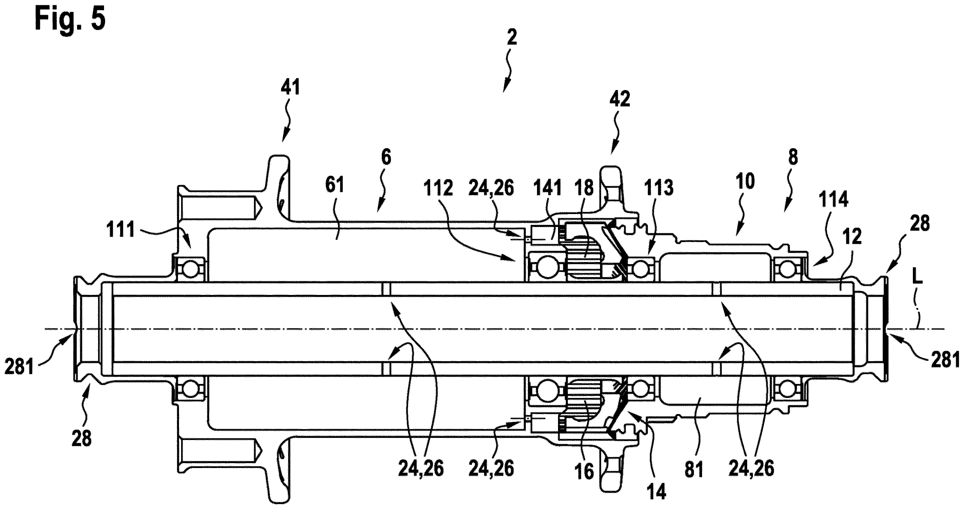

Denkbar ist eine Entlüftung der Freilaufkammer und/oder spezielle Achsen-Endkappen, die einen Druckausgleich ermöglichen. Falls herkömmliche Achsen-Endkappen komplett aufliegen, verhindern oder vermindern diese einen solchen Druckausgleich. Durch Einbringen beliebiger geeigneter Formen, welche eine Zirkulation von Luft und/oder einen Druckausgleich gestatten, insbesondere von Einfräsungen, Schlitzen oder Durchgängen im Nabenkörper und/oder der Achse und/oder den Endkappen, wie bspw. in Fig. 5 dargestellt, kann hingegen ein Druckausgleich stattfinden. An den Auflagen der Endkappen bzw. der Achsen zum Rahmen kann der Druckausgleich auch durch Rändelungen hergestellt werden.

Es ist weiterhin möglich, dass eine optionale Entlüftung als Ausgestaltungen der vorbeschriebenen Kegelverzahnung realisierbar sind.

Besonders bevorzugt ist innerhalb der Kegelverzahnung eine spezielle Zahnform vorgesehen, die immer eine Linienberührung, und je nach Ausführung, ggf. auch eine Flächen- und Vollflächenberührung, zwischen den Verzahnungspartnern realisiert. Somit werden höhere Kräfte bei geringerem Verschleiß übertragen. Zusätzlich können sich die Zähne aneinander abwälzen, so dass weniger Reibung entsteht. Ebenso wird beim Abgleiten durch die Flächenberührung und Linienberührung weniger Verschleiß auftreten.

Im Stand der Technik entsteht während der Freilauffunktion (Leerlauffunktion) auf der Zahnrückseite der Stirnradverzahnung i.A. eine Punktberührung zwischen den Verzahnungspartnern.

Bei der hier vorgeschlagenen Zahnform entsteht keine Punktberührung. Durch eine speziell hergestellte Fläche auf der Zahnrückseite, an die stets eine die Längsachse der Nabe schneidende Gerade angelegt werden kann, entsteht zwischen zwei korrespondierenden Verzahnungspartnern stets zumindest eine Linienberührung, ggf. auch eine Flächen- oder Teilflächenberührung, und dadurch ein viel geringerer Verschleiß.

Die Herstellung dieser speziellen Zahnform kann durch Fräsen erfolgen, oder erfordert ggf. spezielle Stoß- und Räumwerkzeuge.

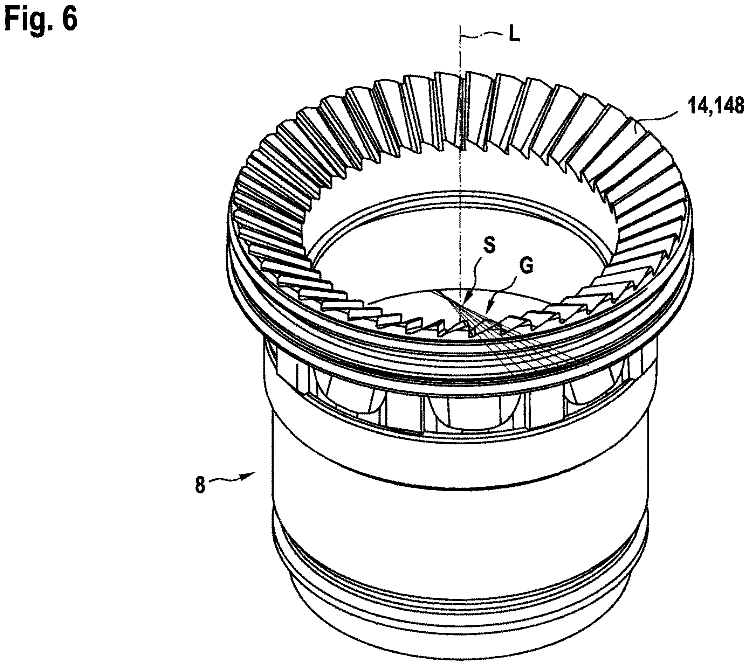

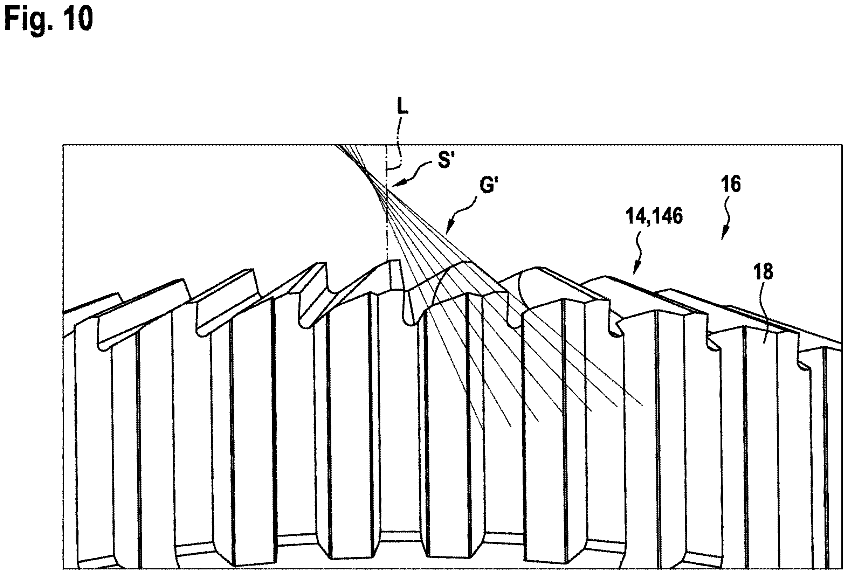

Bevorzugte Ausführungsbeispiele der genannten Zahnform werden noch eingehender anhand der Fig. 6-11 beschrieben.

Es sei besonders hervorgehoben, dass die vorgeschlagene verbesserte Zahnform als vorteilhafte Ausgestaltung der vorbeschriebenen Kegelverzahnung realisierbar ist.

Der Freilauf der Nabe weist vorzugsweise auf seiner dem Nabenkörper abgewandten Seite eine Aufnahme und/oder ein Außengewinde zur Aufnahme und/oder Festlegung eines Kraftübertragungsmittels auf.

Die Aufnahme für das Kraftübertragungsmittel kann an deren Umfang ein Außengewinde für die Festlegung des Kraftübertragungsmittels (insbesondere eine Kassette) aufweisen. Die Kassette weist dabei vorzugsweise eine sich bis zur Außenseite des kleinsten Ritzels erstreckende Innenhülse auf, welche mit einer geeigneten Nuss vom kleinsten Ritzel aus auf das Gewinde der Aufnahme aufgeschraubt wird. Dabei wandert das passende Innenprofil der Kassette über das Aufnahmeprofil der Aufnahme der Kassette, wodurch zwischen der Kassette und der Aufnahme in Umfangsrichtung ein Formschluss entsteht und Kraft übertragen werden kann. Derartige Festlegungen für Kassetten sind für sich gesehen bekannt.

Die Aufnahme für das Kraftübertragungsmittel kann alternativ ein sich im Wesentlichen bis zum äußeren Ende der Aufnahme erstreckendes Aufnahmeprofil aufweisen, auf welches ein Kraftübertragungsmittel (insbesondere eine Kassette) aufgeschoben werden kann. Die Kassette kann dann mit einer Abschlussmutter verschraubt werden, welche in ein Innengewinde der im Wesentlichen zylindrischen Aufnahme eingreift. Über das Aufnahmeprofil und das korrespondierende Innenprofil der Kassette kann dann in Umfangsrichtung eine Antriebskraft übertragen werden. Derartige Festlegungen für Kassetten sind für sich gesehen bekannt.

### Figuren

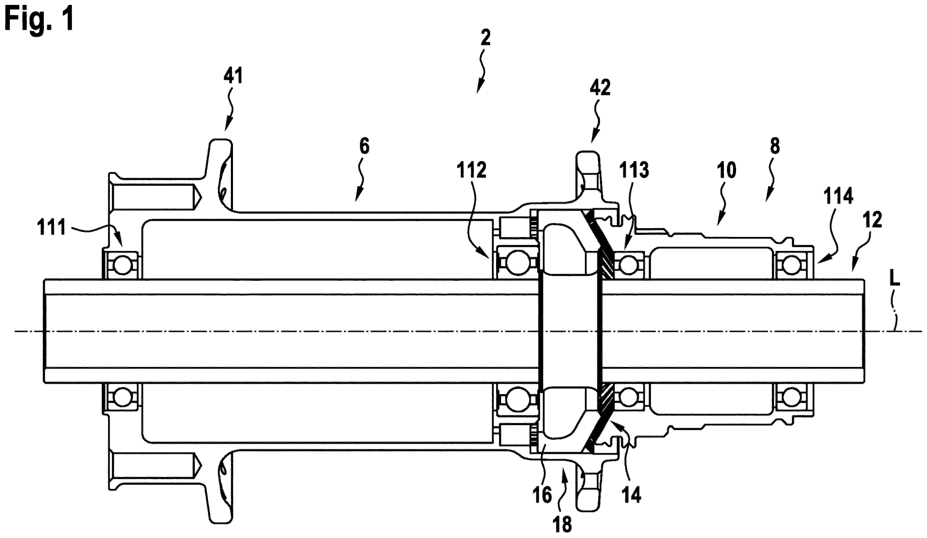

Ergänzend bzw. zusätzlich zu den bereits erörterten vorteilhaften Ausgestaltungen und Weiterbildungen der Lehre werden in der Zeichnung im Umfang der **Figuren 1 bis 11** dargestellte Ausführungsbeispiele von erfindungsgemäßen Vorrichtungen näher erläutert. Die anhand der Zeichnung erörterten Beispiele schränken die Erfindung jedoch nicht auf die gezeigten Beispiele ein. Bei der Erörterung der Ausführungsbeispiele anhand der Zeichnung werden auch im Allgemeinen bevorzugte Ausgestaltungen und Weiterbildungen der Lehre aufgezeigt.

Weiterbildungen der vorstehend beschriebenen vorteilhaften Ausgestaltungen mit Merkmalen der nachstehenden Ausführungsbeispiele bilden dabei genau wie Weiterbildungen der nachstehend beschriebenen Ausführungsbeispiele mit Merkmalen der vorstehend beschriebenen Ausgestaltungen ausdrücklich weitere vorteilhafte Ausgestaltungen der Erfindung, und sind damit Teil der vorliegenden Offenbarung.

In Bezug auf die nachstehende Erläuterung der Figuren ist allgemein darauf zu verweisen, dass bereits in vorangegangenen Figuren dargestellte und diesbezüglich bereits weiter oben erläuterte Bezugszeichen aus Gründen der Übersichtlichkeit in darauf folgenden Figuren zum Teil nicht erneut aufgetragen worden sind und/oder anhand dieser nachfolgenden Figuren zum Teil nicht erneut erläutert werden. Für die Erläuterung solcher Bezugszeichen und der zugehörigen technischen Merkmale wird zur Vermeidung von Wiederholungen vollumfänglich auf die jeweilige Beschreibung zu den entsprechenden vorangehenden Figuren verwiesen.

Es zeigen:
Figur 1 ein bevorzugtes Ausführungsbeispiel der erfindungsgemäßen Nabe in einer seitlichen Schnittansicht,
Figur 2 den Freilaufkörper der Nabe aus Fig. 1 jeweils in einer seitlichen Ansicht, in einer seitlichen Schnittdarstellung, sowie in einer perspektivischen seitlichen Darstellung,
Figur 3 die Zahnscheibe des Nabenkörpers der Nabe aus Fig. 1 jeweils in einer seitlichen Ansicht, einer Draufsicht, in einer seitlichen Schnittdarstellung, sowie in einer perspektivischen Darstellung,
Figur 4 eine seitliche Ansicht des Freilaufkörpers aus Fig. 2 (unten) und der Zahnscheibe aus Fig. 3 (oben), wobei die beiden Teile in bestimmungsgemäßer Weise miteinander im Eingriff stehen,
Figur 5 ein Ausführungsbeispiel einer nicht erfindungsgemä-ßen Nabe, hier mit einem optionalen Entlüftungssystem, in einer teils geschnittenen seitlichen Ansicht,
Figur 6 eine seitliche, perspektivische Ansicht des Freilaufkörpers aus Fig. 2, wobei mit eingezeichneten Hilfslinien eine spezielle Form der Kegelverzahnung veranschaulicht wird,
Figur 7 einen vergrößerten Ausschnitt aus der Darstellung von Fig. 6,
Figur 8 einen weiter vergrößerten Ausschnitt aus der Darstellung von Fig. 7, anhand dessen die spezielle Form der Kegelverzahnung erläutert wird,
Figur 9 eine seitliche, perspektivische Ansicht der Zahnscheibe aus Fig. 3, welche eine mit dem Freilaufkörper aus den Fig. 6 bis 8 korrespondierende, spezielle Form der Kegelverzahnung aufweist, welche mit eingezeichneten, zu Fig. 6 korrespondierenden Hilfslinien veranschaulicht wird,
Figur 10 einen vergrößerten Ausschnitt aus der Darstellung von Fig. 9, und
Figur 11 einen weiter vergrößerten Ausschnitt aus der Darstellung von Fig. 10.

**Fig. 1** zeigt ein bevorzugtes Ausführungsbeispiel der erfindungsgemäßen Nabe 2 für ein Fahrrad-Laufrad in einer seitlichen Schnittansicht. Bei dem dargestellten Beispiel handelt es sich um eine Hinterradnabe. Die Nabe 2 wird von hinten in Fahrtrichtung des Fahrrads gesehen.

Die Nabe 2 umfasst einen linken und einen rechten Speichenflansch 41, 42. Der Bereich links vom rechten Speichenflansch 42 ist der Nabenkörper 6. Der Bereich rechts hiervon ist der Freilaufkörper 8. Der Freilaufkörper 8 weist außen eine Aufnahme 10 für ein Kraftübertragungsmittel, in diesem Fall ein Ritzelpaket (Kassette, nicht dargestellt) auf.

Nabenkörper 6 und Freilaufkörper 8 stellen dabei die erfindungsgemäße Baugruppe für eine Nabe 2 dar.

Sowohl der Nabenkörper 6 als auch der Freilaufkörper 8 sind jeweils mit zwei Wälzlagern 111, 112, 113, 114 auf der Achse 12 (Radachse 12) drehbar gelagert.

Die erfindungsgemäße Nabe für ein Fahrrad-Laufrad umfasst einen Nabenkörper 6 sowie einen Freilaufkörper 8, wobei zwischen dem Nabenkörper 6 und dem Freilaufkörper 8 eine Kegelverzahnung 14 realisiert ist.

Der mit dem Freilaufkörper 8 realisierte Freilauf dient in bekannter Weise dazu, den sich bei einer Vorwärtsbewegung des Fahrrads stets mitdrehenden Nabenkörper 6 von dem Antrieb zu entkoppeln, wenn kein Antriebsmoment eingeleitet wird. Sobald ein Antriebsmoment anliegt, muss der Freilauf sofort wieder einen Eingriff zwischen Freilaufkörper 8 und Nabenkörper 6 herstellen.

Die endseitige Verzahnung 14 des Freilaufkörpers 8 interagiert hier mit einer Zahnscheibe 16 des Nabenkörpers 6, welche einerseits die korrespondierende Kegelverzahnung 14 aufweist, und andererseits in geeigneter Weise das zu übertragende Drehmoment in den Nabenkörper 6 weiter- bzw. einleiten kann. Dazu weist die Zahnscheibe 16 eine weitere radiale Außenverzahnung 18 auf, welche mit entsprechenden Ausnehmungen im Nabenkörper 6 im Eingriff steht, wobei die Zahnscheibe 16 in axialer Richtung des Nabenkörpers 6 verschiebbar ist.

Weiter ist ein federndes Element vorgesehen, welches die Zahnscheibe 16 gegen die endseitige Verzahnung 14 des Freilaufkörpers 8 drückt. So wird beim Ausüben eines Antriebsmoments ein Eingriff zwischen Freilaufkörper 8 und Zahnscheibe 16 hergestellt, während ansonsten der stehende Freilaufkörper 8 und der während einer Vorwärtsbewegung des Laufrads mitdrehende Nabenköper 6 mit ihren Verzahnungen 14 aneinander abgleiten können, wodurch der Zweck des Freilaufs erreicht wird.

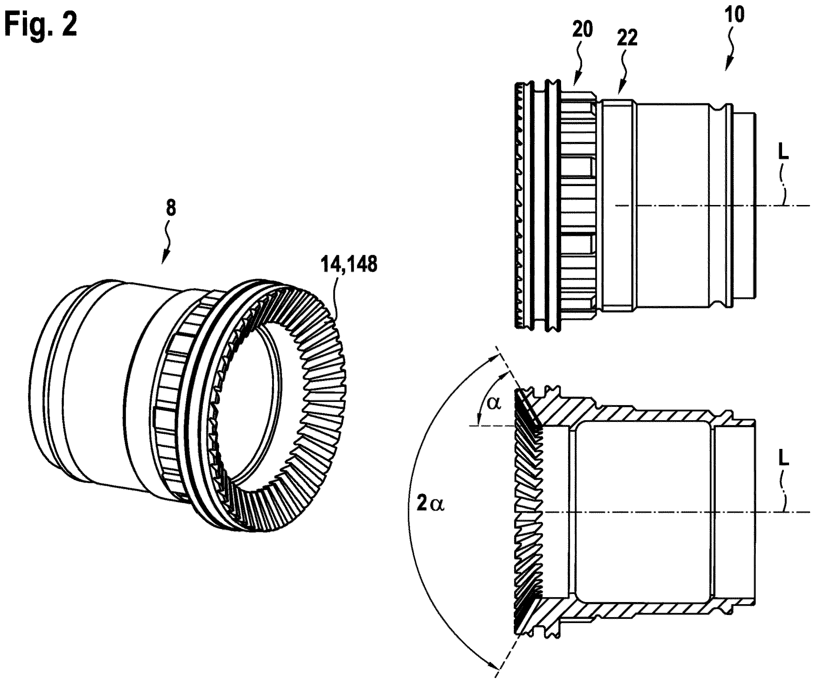

**Fig. 2** zeigt den Freilaufkörper 8 der Nabe 2 aus Fig. 1 jeweils in einer seitlichen Ansicht, in einer seitlichen Schnittdarstellung, sowie in einer perspektivischen seitlichen Darstellung. Hier ist in dem dem Nabenkörper 6 zugewandten Ende des Freilaufkörpers 8 eine endseitige Verzahnung 14, 148 eingebracht, welche einen sich öffnenden Kegelwinkel 2α umschreibt. Die Oberfläche der Verzahnung 148 ist dabei mit dem halben Betrag α des Kegelwinkels 2α gegenüber der Mittelachse (Längsachse) L geneigt. Dieser Winkel (Kegelneigung) α beträgt hier bei diesem Beispiel 61°, so dass der Kegelwinkel 2α hier 122° beträgt.

Der Freilaufkörper 8 weist neben der Kegelverzahnung 14, 148 ein Aufnahmeprofil 20 für die Drehmomentübertragung vom Kraftübertragungsmittel (hier nicht dargestellt) und daneben ein Außengewinde 22 für die Festlegung des Kraftübertragungsmittels auf.

Das Kraftübertragungsmittel, in diesem Fall eine Kassette (hier nicht dargestellt), weist dabei eine sich bis zur Außenseite des kleinsten Ritzels erstreckende Innenhülse auf, welche mit einer geeigneten Nuss vom kleinsten Ritzel aus auf das Außengewinde 22 des Freilaufkörpers 8 aufgeschraubt wird. Dabei wandert das passende Innenprofil der Kassette über das Aufnahmeprofil 20 des Freilaufkörpers 8, wodurch zwischen der Kassette und dem Freilaufkörper 8 in Umfangsrichtung ein Formschluss entsteht und Kraft übertragen werden kann. Ein solches System zum Festlegen einer Kassette und zum Übertragen eines Drehmoments von einer Kassette auf eine Nabe 2 ist seitens der Firma SRAM^{®} unter der Bezeichnung XD^{®} bekannt.

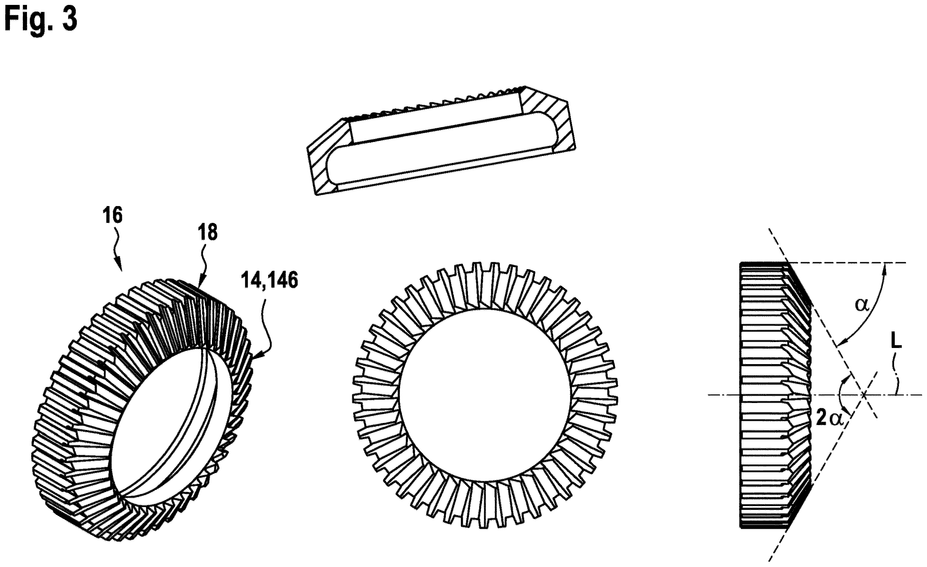

**Fig. 3** zeigt die Zahnscheibe 16 des Nabenkörpers 6 aus Fig. 1 jeweils in einer seitlichen Ansicht, einer Draufsicht, in einer seitlichen Schnittdarstellung, sowie in einer perspektivischen Darstellung.

Die Zahnscheibe 16 weist zunächst in Richtung der Mittelachse L eine zu der Kegelverzahnung 148 des Freilaufkörpers 8 korrespondierende Kegelverzahnung 14, 146 auf. Da das nabenkörperseitige Ende des Freilaufkörpers 8 hier mit einem sich öffnenden Kegelwinkel 2α ausgestaltet ist (vgl. Fig. 2), ist die Zahnscheibe 16 mit einem sich schließenden Kegelwinkel 2α desselben Betrags ausgestaltet, nämlich hier wiederum 122°. Der Betrag der Kegelneigung α der Kegelverzahnung 146 gegenüber der Mittelachse L beträgt bei der Zahnscheibe 16 wie bei dem Freilaufkörper 8 dabei bei diesem Ausführungsbeispiel 61°.

Ferner ist hier gut die weitere radiale Außenverzahnung 18 der Zahnscheibe 16 zum Eingriff mit dem Nabenkörper 6 erkennbar. Dabei bleibt die Zahnscheibe 16 innerhalb des Nabenkörpers 6 in Richtung der Längsachse L verschiebbar.

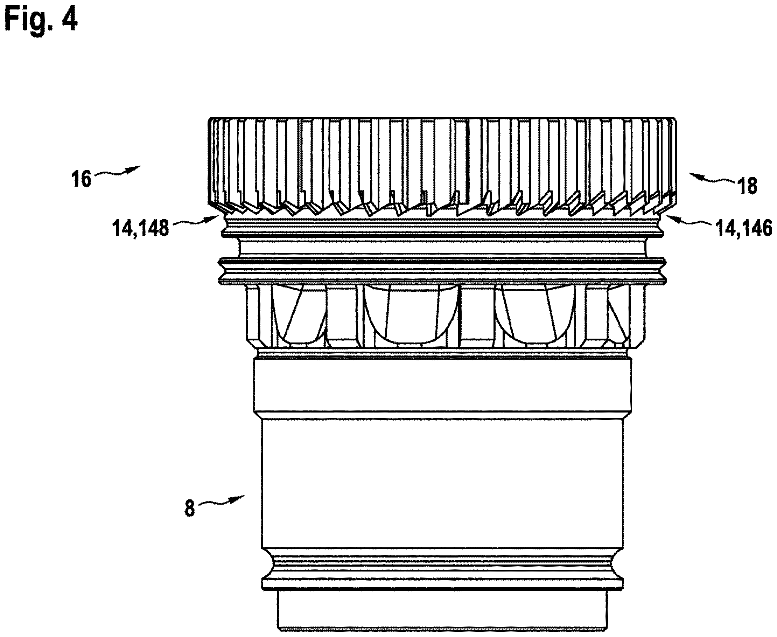

**Fig. 4** zeigt eine seitliche Ansicht des Freilaufkörpers 8 aus Fig. 2 (unten) und der Zahnscheibe 16 aus Fig. 3 (oben), wobei diese beiden Teile 8, 16 in bestimmungsgemäßer Weise miteinander im Eingriff stehen. Die Zahnscheibe 16 ist insofern mit ihrer Kegelverzahnung 14, 146 in die Kegelverzahnung 14, 148 des Freilaufkörpers 8 eingesetzt worden. Somit bildet sich insgesamt die hier in Rede stehende Kegelverzahnung 14 zwischen dem Nabenkörper 6 (über die Zahnscheibe 16) und dem Freilaufkörper 8.

**Fig. 5** zeigt ein Ausführungsbeispiel einer nicht erfindungsgemäßen Nabe 2 in einer teils geschnittenen seitlichen Ansicht.

Dieses Ausführungsbeispiel entspricht zunächst demjenigen aus Fig. 1, allerdings ist hier ein optionales Entlüftungssystem realisiert worden.

Hier wird eine Entlüftung der drei innerhalb der Nabe 2 vorliegenden Kammern (Nabenkörperraum 61, Verzahnungsraum 141 und Freilaufraum 81) erreicht. Dazu sind jeweils zwischen Freilaufraum 81 und Achse 12, Verzahnungsraum 141 und Nabenkörperraum 61, und Nabenkörperraum 61 und Achse 12 Entlüftungsöffnungen 24, hier als Entlüftungsbohrungen 26, eingebracht.

Es können weitere variable Konturen zur Ermöglichung einer Zirkulation / eines Druckausgleichs vorgesehen werden. In die äußere Oberfläche (Mantel) der Achse 12 können Vertiefungen, vertiefte Flächen, oberflächliche Schlitze, oder gerade oder spiralförmig gewundene Vertiefungen oder Kanäle eingebracht, insbesondere eingefräst, werden. Durch solche Vertiefungen kann Luft unterhalb des inneren Ringes eines auf der Achse 12 sitzenden Wälzlagers 111, 112, 113, 114, d.h. zwischen Achse 12 und dem inneren Ring, hindurchströmen.

Durch spezielle Endkappen 28 an den Enden der Achse 12 kann ferner Luft in das Innere der Achse 12 ein- bzw. ausströmen. Die Endkappen 28 weisen variable Konturen, insbesondere Bohrungen oder Schlitze 281 auf, welche sich beim Anliegen eines Über- bzw. Unterdrucks öffnen und so einen Druckausgleich ermöglichen. Die Endkappen 28 können hierzu aus flexiblem Material, bspw. Kunststoff, gebildet sein. Somit wird der Innenraum der Radachse 12 ebenfalls entlüftet.

Somit können die genannten Kammern 61, 81, 141 über die Entlüftungsöffnungen 24, 281 stets in einem Druckausgleich mit der Umgebung gehalten werden.

Dadurch entsteht bei einer Abkühlung der Nabe 2 kein Unterdruck mehr in den genannten Kammern 61, 81, 141, wodurch Luft mit Wasser und gegebenenfalls auch Schmutz durch Spalten oder Dichtungen, wie z.B. der Wälzlager 111, 112, 113, 114, oder des Freilaufkörpers 8, in das Innere der Nabe 2 gesaugt werden und dort Schaden anrichten können.

Die **Fig. 6 bis 11** erläutern eine optionale und spezielle Zahnform für vorgenannte Kegelverzahnungen 14. Dabei wird immer eine Linienberührung, und je nach Ausführung, eine Flächen- und Vollflächenberührung, zwischen den Verzahnungspartnern 148, 146 realisiert. Somit können höhere Kräfte bei geringerem Verschleiß übertragen werden. Zusätzlich wälzen sich die gegenüberstehenden Zähne 30 aneinander ab, so dass weniger Reibung entsteht. Ebenso wird beim Abgleiten durch die entstehende Flächen- und/oder Linienberührung weniger Verschleiß auftreten.

Bei einer geringeren Baugröße ist so eine größere Kraftübertragung möglich.

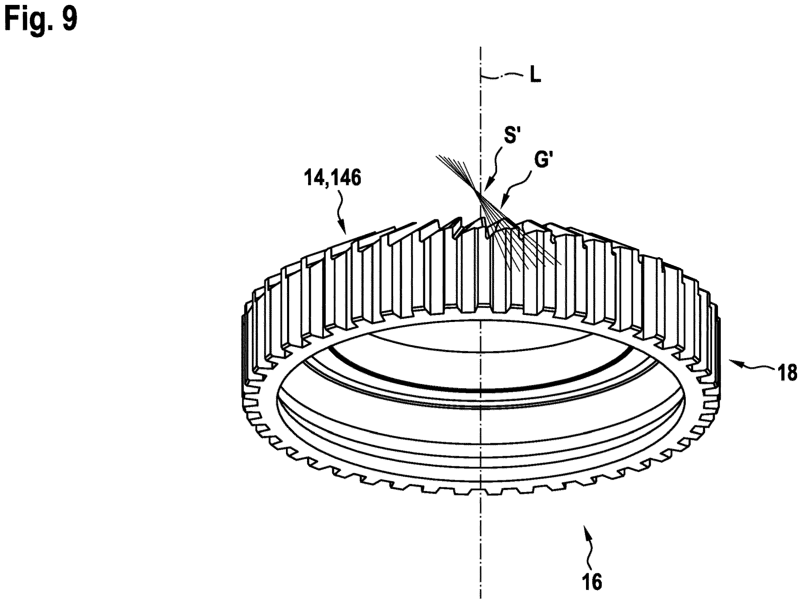

Die **Fig. 6 bis 8** zeigen die spezielle Zahnform an der Kegelverzahnung 14, 148 des Freilaufkörpers 8 aus Fig. 2, während die **Fig. 9 bis 11** die spezielle Zahnform an der hierzu korrespondierenden Kegelverzahnung 14, 146 der Zahnscheibe 16 aus Fig. 3 eines Nabenkörpers 6 aus Fig. 1 verdeutlichen.

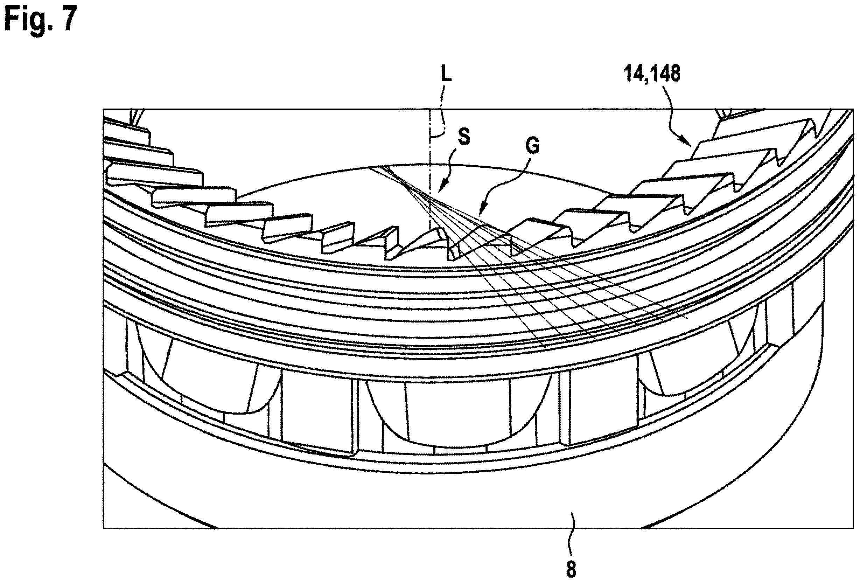

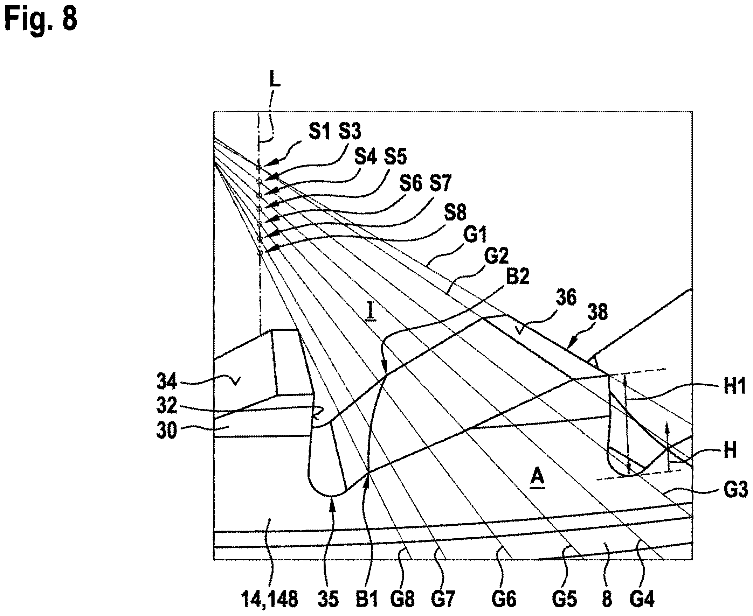

Die Darstellung gemäß **Fig. 8** zeigt eine detaillierte Darstellung eines Zahns 30 der Kegelverzahnung 148 des in **Fig. 6** komplett dargestellten Freilaufkörpers 8, der wiederum in **Fig. 7** ausschnittsweise und vergrößert dargestellt ist. Die im Folgenden zu erläuternden Hilfslinien bzw. Geraden G und deren Schnittpunkte S mit der Längs- bzw. Mittelachse L sind dabei in allen drei Darstellungen aufgetragen worden.

Die Darstellung in **Fig. 8** zeigt die perspektivische Sicht von außen auf einen im Wesentlichen zylindrischen Freilaufkörper 8 mit einer am oberen Ende ausgearbeiteten Kegelverzahnung 14, 148.

Jeder Zahn 30 der Kegelverzahnung 148 weist eine gegen den Uhrzeigersinn gerichtete Zahnvorderseite 32 und eine nach oben und hinten abgegrenzte Zahnrückseite 34 auf.

Im Inneren der Vorrichtung ist die Längsachse L des Freilaufkörpers 8 dargestellt.

Die Höhe H des Zahns, gemessen vom Zahngrund 35, beträgt hier H1.

Der Zahn 30 besitzt auf der Oberseite einen Absatz 36 gleicher Höhe H1. Der Absatz 36 ist so ausgeformt, dass eine an die Zahnvorderkante 38 angelegte Gerade G1 und eine an das rückwärtige Ende des Absatzes A angelegte Gerade G2 die Längsachse L genau im selben Punkt S1 schneiden.

Die Zahnrückseite 34 weist zwischen dem Absatz 36 und der Linie zwischen B1 und B2 einen speziell ausgeformten Bereich auf. Ausgehend von einem unterhalb von S1 liegenden Schnittpunkt S3 existiert dabei stets eine Gerade G3, welche ausgehend von S3 zwischen der Innenseite I und der Außenseite A des Zahns genau entlang der Oberfläche der Zahnrückseite 34 verläuft.

Die Zahnrückseite 34 kann in alternativen Ausgestaltungen auch konvex, konkav, erhaben gebogen in einen Kreisabschnitt, der aus mehreren Kurven besteht, als Ellipse oder flächig und mehrflächig ausgebildet sein.

Auch die Fläche des Absatzes 36 kann in alternativen Ausgestaltungen als Kreisabschnitt (gerundet) oder als Fläche, die zur Zahnvorderseite 32 leicht geneigt ist, ausgebildet sein, vorzugsweise mit einer Neigung von 0-20°. Der höchste Punkt des Zahns 30 befindet sich dann nicht mehr auf der Linie G1, sondern wandert von der Zahnvorderseite 32 in Richtung der Linie G2.

Die Fläche des Absatzes 36 kann dann von der Linie G1 in Richtung der Linie G2 ansteigen, oder ist wie vorliegend beschrieben gerade plan.

Zurück kommend auf das in **Fig. 6 bis 8** konkret gezeigte Ausführungsbeispiel existiert auch zu den Schnittpunkten S4 bis S7 jeweils eine Gerade G4 bis G7, welche ausgehend von dem jeweiligen Schnittpunkt zwischen der Innenseite I und der Außenseite A des Zahns 30 genau entlang der Oberfläche der Zahnrückseite 34 verläuft.

Der unterste Schnittpunkt S8, für den diese Bedingung zutrifft, ist der Schnittpunkt für die Gerade G8, welche den Zahn 30 genau im Punkt B1 der Bereichsgrenze berührt und dort als Tangente an der Oberfläche des Bereichs zwischen dem Absatz 36 an der Vorderkante 38 und der Linie zwischen B1 und B2 auf der Zahnrückseite 34 anliegt.

Nun werde ein zweiter Körper 16, welcher eine Verzahnung 146 wie die Verzahnung 148 des dargestellten Freilaufkörpers 8 aufweist, allerdings den negativen Betrag der Kegelneigung α der Verzahnung 148 aufweisen muss, umgedreht und von oben auf den dargestellten Freilaufkörper 8 aufgesetzt. Dann werde der zweite Körper 16 gegenüber dem dargestellten Freilaufkörper 8 gegen den Uhrzeigersinn verdreht, so dass die Verzahnungen 148, 146 nicht im Eingriff sind, sondern aneinander abgleiten.

Bei dem zweiten Körper 16 handelt es sich bevorzugt um eine Zahnscheibe 16, welche sich mit dem zuvor beschriebenen Freilaufkörper 8 im Eingriff befindet. Dies ist in **Fig. 4** dargestellt.

Eine entsprechende, mit dem Freilaufkörper aus den vorhergehenden Figuren korrespondierende, sowie bereits in Fig. 3 gezeigte Zahnscheibe 16 mit einer entsprechenden Kegelverzahnung 146 ist in den **Fig. 9 bis 11** dargestellt. Zur Erläuterung der dort realisierten Verzahnung 146 kann auf die obigen und nachfolgenden Ausführungen zu den Fig. 6 bis 9 anhand des Freilaufkörpers 8 verwiesen werden.

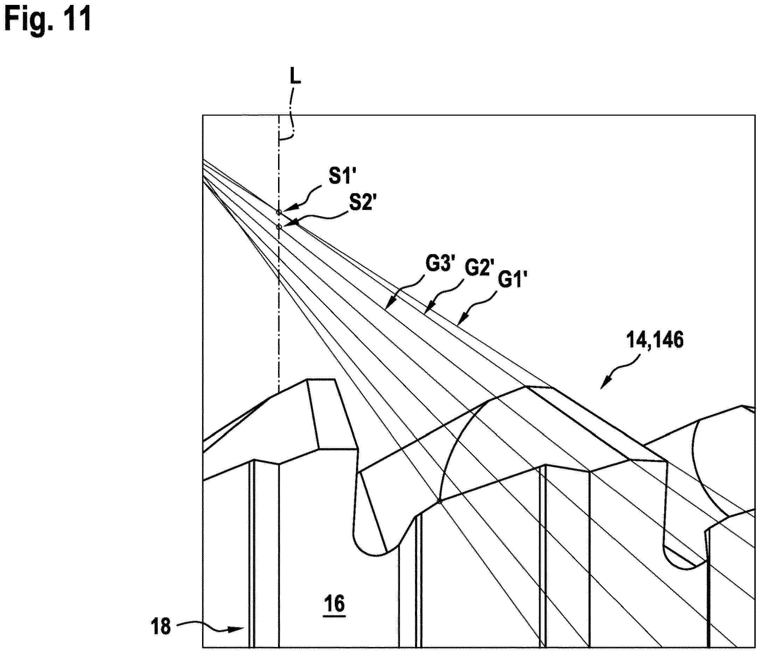

Zurück zu der Darstellung aus **Fig. 8** existiert somit denkgesetzlich - aufgrund der insoweit identischen bzw. korrespondierenden Verzahnungsformen - zu jeder Stellung der dann gegenüberliegenden Verzahnungen 148, 146 eine Gerade G zwischen G2 und G8, welche genau die augenblickliche Berührungslinie zwischen den beiden gegenüberliegenden Verzahnungen 148, 146 wiedergibt. Oder mit anderen Worten: in jedem Moment des Abgleitens der Zahnrückseiten 34 fällt im Berührungsbereich der beiden Verzahnungen 148, 146 die Gerade G der Verzahnung 148 des Freilaufkörpers 8 genau mit der korrespondierenden Gerade G' (nicht in Fig. 8 dargestellt, s. hierzu Fig. 11) der korrespondierenden Verzahnung 146 der Zahnscheibe 16 zusammen, somit bildet diese Gerade G=G' zwangsläufig die aktuelle Berührungslinie zwischen den Verzahnungen 148, 146.

Zwischen den Verzahnungen 148, 146, hier des Freilaufkörpers 8 und der Zahnscheibe 16, muss also im Bereich zwischen der Gerade G2 und der Linie B1-B2 immer zumindest eine Linienberührung vorliegen.

Selbiges gilt beim Abgleiten der Verzahnungen 148, 146 an der Geraden G2 in Richtung des Absatzes 36 und an der Geraden G1 vom Absatz 36 in Richtung des Zahngrunds 35. In diesem Moment treffen die Geraden G2 und G2' bzw. G1 und G1' der gegenüberliegenden Verzahnungen 148, 146 jeweils aufeinander, so dass eine Linienberührung sichergestellt ist.

Bevorzugt kann es sich anstelle einer Linienberührung auch um eine Flächen- oder Teilflächenberührung handeln, wenn anstelle der Geraden G2 bis G8 Flächen oder Teilflächen realisiert werden, welche zur Längsachse L fluchtend ausgeführt sind.

Allgemein ist eine Ausführung der Zahnvorderseite 32 und/oder der Zahnrückseite 34 bevorzugt, wobei deren Geometrie, ob konkav, konvex, flächig oder teilflächig, immer zur Mittelachse L des Bauteils 8, 16 fluchtet, und/oder in jeder Stellung des Abwälz- bzw. Abgleitvorgangs der Verzahnungspartner 148, 146 die entstehende Kontaktlinie G, G' oder -fläche durch die Mittelachse L zeigt, und zwar unabhängig von dem Betrag eines Kegelwinkels 2α der Verzahnung 148, 146. Sofern die Verzahnung 148, 146 einen Kegelwinkel 2α aufweist, wird der Schnittpunkt S, S' der Berührungslinie G, G' mit der Mittelachse L des Bauteils 8, 16 dann entsprechend höher bzw. tiefer liegen als ohne Kegelwinkel 2α, was aber die Qualität des hier geschilderten Abwälzvorgangs nicht unbedingt beeinflusst.

Bei dem Beispiel aus Fig. 8 liegt zumindest dann eine Flächenberührung vor, wenn die Absätze 36 der Verzahnungen 148, 146 aufeinander abgleiten.

Der Bereich der Zahnrückseite 34, welcher in Fig. 8 unterhalb der Linie B1-B2 liegt, ist hier nicht wie der oben beschriebene speziell ausgeformte Bereich ausgestaltet, da dort aufgrund des nächsten links anstehenden Zahns 30 der für die Stoß- und/oder Räumbearbeitung erforderliche Platz für das Werkzeug nicht mehr ausreicht. Dieser Bereich kann als Auslauf bezeichnet werden.

Vorhandensein und Größe eines solchen Auslaufs können allerdings variieren, nämlich je nach Herstellungsart der Verzahnung 148, 146 - z.B. spanabhebende Bearbeitung, Stoßen, Räumen oder Fräsen.

Der Zahnauslauf kann bei einer Herstellung durch 3D-Druck, Sintern, Stanzen, Prägen oder Lasern erheblich verkleinert werden oder sogar komplett entfallen, so dass ggf. die gesamte Zahnrückseite 34 mit der vorhergehend beschriebenen speziellen Oberfläche ausgestaltet werden kann.

### Bezugszeichenliste

- 2α: Kegelwinkel
- α: Kegelneigung
- A: Außen
- B1, B2: Bereichsgrenzen (Zahn)
- G, G1,..; G', G1',..: Gerade, Hilfslinie
- H, H1: Höhe
- I: Innen
- L: Längsachse, Mittelachse
- S, S1,..; S', S1',..: Schnittpunkt von G und L bzw. von G' und L
- 2: Nabe
- 41: Linker Speichenflansch
- 42: Rechter Speichenflansch
- 6: Nabenkörper
- 61: Nabenkörperraum (Kammer)
- 8: Freilaufkörper
- 81: Freilaufraum (Kammer)
- 10: Aufnahme (für Kraftübertragungsmittel)
- 111, 112, 113, 114: Wälzlager
- 12: Achse, Radachse
- 14: Kegelverzahnung
- 141: Verzahnungsraum (Kammer)
- 146: Kegelverzahnung der Zahnscheibe, endseitige Verzahnung der Zahnscheibe
- 148: Kegelverzahnung des Freilaufkörpers, endseitige Verzahnung des Freilaufkörpers
- 16: Zahnscheibe
- 18: Radiale Außenverzahnung der Zahnscheibe
- 20: Aufnahmeprofil (des Freilaufkörpers für Kraftübertragungsmittel)
- 22: Außengewinde (des Freilaufkörpers für Kraftübertragungsmittel)
- 24: Entlüftungsöffnung
- 26: Entlüftungsbohrung
- 28: Endkappe (Achse)
- 281: Schlitz (Endkappe)
- 30: Zahn (Verzahnung)
- 32: Zahnvorderseite
- 34: Zahnrückseite
- 35: Zahngrund
- 36: Absatz (Zahn)
- 38: Zahnvorderkante

## Patentansprüche

1. Nabe (2) für ein Fahrrad-Laufrad, umfassend einen Nabenkörper (6) sowie einen Freilaufkörper (8), **dadurch gekennzeichnet, dass** zwischen dem Nabenkörper (6) und dem Freilaufkörper (8) eine Kegelverzahnung (14) realisiert ist, wobei in dem dem Nabenkörper (6) zugewandten Ende des Freilaufkörpers (8) eine endseitige Verzahnung (14, 148) eingebracht ist, welche einen sich öffnenden oder einen sich schließenden Kegelwinkel (2α) umschreibt.

2. Nabe (2) nach Anspruch 1, **dadurch gekennzeichnet, dass** der Kegelwinkel (2α) 120,1-179,9°, bevorzugt 121-179°, weiter bevorzugt 125-175°, weiter bevorzugt 130-170°, weiter bevorzugt 135-165°, weiter bevorzugt 140-160°, weiter bevorzugt 145-155°, und weiter bevorzugt 150°, beträgt.

3. Nabe (2) Anspruch 1 oder 2, **dadurch gekennzeichnet, dass** der Nabenkörper (6) eine zu der Verzahnung (14, 148) des Freilaufkörpers (8) korrespondierende Verzahnung (14, 146) aufweist.

4. Nabe (2) nach Anspruch 3, **dadurch gekennzeichnet, dass** die mit dem Freilaufkörper (8) korrespondierende Kegelverzahnung (14, 146) des Nabenkörpers (6) in einer Zahnscheibe (16) des Nabenkörpers (6) ausgebildet ist, insbesondere wobei die Zahnscheibe (16) innerhalb des Nabenkörpers (6) in axialer Richtung (L) verschiebbar ist.

5. Nabe (2) nach Anspruch 4, **dadurch gekennzeichnet, dass** das Verhältnis der Anzahl der Zähne (30) der Kegelverzahnung (14, 146) der Zahnscheibe (16) zu der Anzahl der Zähne (30) einer Außenverzahnung (18) der Zahnscheibe (16) 1:1 oder 1:2 ist.

6. Nabe (2) nach einem der Ansprüche 1 bis 5, **dadurch gekennzeichnet, dass** die Paarung der Kegelverzahnung (14, 148, 146) lediglich zweiteilig ist, nämlich aus dem Freilaufkörper (8) und dem Nabenkörper (6), oder aus dem Freilaufkörper (8) und einer Zahnscheibe (16), besteht.

7. Nabe (2) nach einem der Ansprüche 1 bis 6, **dadurch gekennzeichnet, dass** innerhalb einer Verzahnung (14) zwischen Nabenkörper (6) und Freilaufkörper (8) eine Zahnform vorgesehen ist, die immer eine Linienberührung und/oder eine Flächen- oder Vollflächenberührung zwischen den Verzahnungspartnern (146, 148) realisiert.

8. Nabe (2) nach einem der Ansprüche 1 bis 7, **gekennzeichnet durch**
einen im Wesentlichen zylindrischen, sich entlang einer Längsachse (L) erstreckenden Freilaufkörper (8) mit einer an einem Ende ausgearbeiteten Kegelverzahnung (148), wobei dieses Ende als oberes Ende definiert wird,
wobei jeder Zahn (30) eine gegen den Uhrzeigersinn gerichtete Zahnvorderseite (32) und eine nach oben und hinten abgegrenzte Zahnrückseite (34) aufweist,
und wobei die Zahnrückseite (34) einen Bereich aufweist, für den stets eine Gerade (G, G1-G8) existiert, welche ausgehend von einem Schnittpunkt (S, S1-S8) mit der Längsachse (L) zwischen der Innenseite (I) und der Außenseite (A) des Zahns (30) genau entlang der Oberfläche der Zahnrückseite (34) verläuft.

9. Nabe (2) nach Anspruch 8, **gekennzeichnet durch** eine Zahnscheibe (16) des Nabenkörpers (6) mit einer zu dem Freilaufkörper (8) korrespondierenden Kegelverzahnung (146), welche den negativen Betrag der Kegelneigung (α) der Kegelverzahnung (148) des Freilaufkörpers (8) aufweist.

10. Nabe (2) nach einem der Ansprüche 1 bis 9, **dadurch gekennzeichnet, dass** der Freilaufkörper (8) auf seiner dem Nabenkörper (6) abgewandten Seite eine Aufnahme (10) und/oder ein Außengewinde (22) zur Aufnahme und/oder Festlegung eines Kraftübertragungsmittels aufweist, insbesondere wobei das Kraftübertragungsmittel eine Kassette oder eine Riemenscheibe oder ein Ritzel ist.

11. Baugruppe für eine Nabe (2) für ein Fahrrad-Laufrad nach einem der Ansprüche 1 bis 10, wobei die Baugruppe aus einem Nabenkörper (6) und einem Freilaufkörper (8) besteht.

12. Nabenkörper (6) für eine Nabe (2) für ein Fahrrad-Laufrad nach einem der Ansprüche 1 bis 10.

13. Freilaufkörper (8) für eine Nabe (2) für ein Fahrrad-Laufrad nach einem der Ansprüche 1 bis 10.

14. Fahrrad-Laufrad mit einer Nabe (2) nach einem der Ansprüche 1 bis 10.

15. Fahrrad mit einem Fahrrad-Laufrad nach Anspruch 14.

## Claims

1. Hub (2) for a bicycle wheel, comprising a hub body (6) and a freewheel body (8), **characterized in that** a conical toothing (14) is implemented between the hub body (6) and the freewheel body (8), an end-side toothing (14, 148) being introduced in the end of the freewheel body (8) facing the hub body (6), which end-side toothing circumscribes an opening or closing cone angle (2α).

2. Hub (2) according to claim 1, **characterized in that** the cone angle (2α) is 120.1-179.9°, preferably 121-179°, more preferably 125-175°, more preferably 130-170°, more preferably 135-165°, more preferably 140-160°, more preferably 145-155°, and more preferably 150°.

3. Hub (2) claim 1 or 2, **characterized in that** the hub body (6) has a toothing (14, 146) corresponding to the toothing (14, 148) of the freewheel body (8).

4. Hub (2) according to claim 3, **characterized in that** the conical toothing (14, 146) of the hub body (6) corresponding to the freewheel body (8) is formed in a toothed disc (16) of the hub body (6), in particular the toothed disc (16) being movable within the hub body (6) in the axial direction (L).

5. Hub (2) according to claim 4, **characterized in that** the ratio of the number of teeth (30) of the conical toothing (14, 146) of the toothed disc (16) to the number of teeth (30) of an external toothing (18) of the toothed disc (16) is 1:1 or 1:2.

6. Hub (2) according to any of claims 1 to 5, **characterized in that** the pairing of the conical toothing (14, 148, 146) consists of only two parts, namely consists of the freewheel body (8) and the hub body (6), or the freewheel body (8) and a toothed disc (16).

7. Hub (2) according to any of claims 1 to 6, **characterized in that** a tooth space is provided within a toothing (14) between the hub body (6) and the freewheel body (8), which tooth shape always produces a line contact and/or a surface or full surface contact between the toothing partners (146, 148).

8. Hub (2) according to any of claims 1 to 7, **characterized by**
a substantially cylindrical freewheel body (8) extending along a longitudinal axis (L) and having a conical toothing (148) formed at one end, this end being defined as the upper end,
each tooth (30) having a tooth front side (32) oriented counterclockwise and a tooth rear side (34) delimited at the top and rear,
and the tooth rear side (34) having a region for which a straight line (G, G1-G8) always exists which, starting from an intersection point (S, S1-S8) with the longitudinal axis (L) between the inner side (I) and the outer side (A) of the tooth (30), runs exactly along the surface of the tooth rear side (34).

9. Hub (2) according to claim 8, **characterized by** a toothed disc (16) of the hub body (6) comprising a conical toothing (146) corresponding to the freewheel body (8), which toothed disc has the negative value of the cone inclination (α) of the conical toothing (148) of the freewheel body (8).

10. Hub (2) according to any of claims 1 to 9, **characterized in that** the freewheel body (8) has, on its side facing away from the hub body (6), a receptacle (10) and/or an external thread (22) for receiving and/or fixing a power transmission means, in particular the power transmission means being a cassette or a pulley or a pinion.

11. Assembly for a hub (2) for a bicycle wheel according to any of claims 1 to 10, wherein the assembly consists of a hub body (6) and a freewheel body (8).

12. Hub body (6) for a hub (2) for a bicycle wheel according to any of claims 1 to 10.

13. Freewheel body (8) for a hub (2) for a bicycle wheel according to any of claims 1 to 10.

14. Bicycle wheel comprising a hub (2) according to any of claims 1 to 10.

15. Bicycle comprising a bicycle wheel according to claim 14.

## Revendications

1. Moyeu (2) pour une roue de bicyclette, comprenant un corps de moyeu (6) ainsi qu'un corps de roue libre (8), **caractérisé en ce qu'**une denture conique (14) est réalisée entre le corps de moyeu (6) et le corps de roue libre (8), dans lequel une denture (14, 148) d'extrémité est introduite dans l'extrémité du corps de roue libre (8) tournée vers le corps de moyeu (6), laquelle denture délimite un angle conique (2α) qui s'ouvre ou se ferme.

2. Moyeu (2) selon la revendication 1, **caractérisé en ce que** l'angle conique (2α) est de 120,1-179,9°, de préférence de 121-179°, plus préférablement de 125-175°, plus préférablement de 130-170°, plus préférablement de 135-165°, plus préférablement de 140-160°, plus préférablement de 145-155°, et plus préférablement de 150°.

3. Moyeu (2) revendication 1 ou 2, **caractérisé en ce que** le corps de moyeu (6) présente une denture (14, 146) correspondant à la denture (14, 148) du corps de roue libre (8).

4. Moyeu (2) selon la revendication 3, **caractérisé en ce que** la denture conique (14, 146) du corps de moyeu (6) correspondant au corps de roue libre (8) est formée dans un disque denté (16) du corps de moyeu (6), en particulier dans lequel le disque denté (16) peut être déplacé dans la direction axiale (L) à l'intérieur du corps de moyeu (6).

5. Moyeu (2) selon la revendication 4, **caractérisé en ce que** le rapport du nombre de dents (30) de la denture conique (14, 146) du disque denté (16) au nombre de dents (30) d'une denture extérieure (18) du disque denté (16) est de 1:1 ou 1:2.

6. Moyeu (2) selon l'une des revendications 1 à 5, **caractérisé en ce que** l'accouplement de la denture conique (14, 148, 146) est uniquement en deux parties, à savoir constitué du corps de roue libre (8) et du corps de moyeu (6), ou constitué du corps de roue libre (8) et d'un disque denté (16).

7. Moyeu (2) selon l'une des revendications 1 à 6, **caractérisé en ce qu'**une forme de dent est prévue à l'intérieur d'une denture (14) entre le corps de moyeu (6) et le corps de roue libre (8), laquelle forme de dent réalise toujours un contact linéaire et/ou un contact de surface ou de surface complète entre les partenaires de denture (146, 148).

8. Moyeu (2) selon l'une des revendications 1 à 7, **caractérisé par**
un corps de roue libre (8) sensiblement cylindrique, s'étendant le long d'un axe longitudinal (L), comportant une denture conique (148) élaborée au niveau d'une extrémité, dans lequel ladite extrémité est définie comme extrémité supérieure,
dans lequel chaque dent (30) présente une face avant de dent (32) orientée dans le sens antihoraire et une face arrière de dent (34) délimitée vers le haut et vers l'arrière,
et dans lequel la face arrière de dent (34) présente une zone pour laquelle une ligne droite (G, G1-G8) existe constamment qui, partant d'un point d'intersection (S, S1-S8) comportant l'axe longitudinal (L) entre la face intérieure (I) et la face extérieure (A) de la dent (30), s'étend exactement le long de la surface de la face arrière de dent (34).

9. Moyeu (2) selon la revendication 8, **caractérisé par** un disque denté (16) du corps de moyeu (6) comportant une denture conique (146) correspondant au corps de roue libre (8), lequel disque denté présente la valeur négative de la conicité (α) de la denture conique (148) du corps de roue libre (8).

10. Moyeu (2) selon l'une des revendications 1 à 9, **caractérisé en ce que** le corps de roue libre (8) présente, sur sa face opposée au corps de moyeu (6), un logement (10) et/ou un filetage extérieur (22) pour la réception et/ou la fixation d'un moyen de transmission de force, en particulier dans lequel le moyen de transmission de force est une cassette ou une poulie ou un pignon.

11. Ensemble pour un moyeu (2) pour une roue de bicyclette selon l'une des revendications 1 à 10, dans lequel l'ensemble est constitué d'un corps de moyeu (6) et d'un corps de roue libre (8).

12. Corps de moyeu (6) pour un moyeu (2) pour une roue de bicyclette selon l'une des revendications 1 à 10.

13. Corps de roue libre (8) pour un moyeu (2) pour une roue de bicyclette selon l'une des revendications 1 à 10.

14. Roue de bicyclette comportant un moyeu (2) selon l'une des revendications 1 à 10.

15. Bicyclette comportant une roue de bicyclette selon la revendication 14.
